# EUROPÄISCHE PATENTSCHRIFT

(11) **EP 1 588 881 B1**
(45) Veröffentlichungstag und Bekanntmachung des Hinweises auf die Patenterteilung: **09.05.2012**
(21) Anmeldenummer: 05008293.2
(22) Anmeldetag: 15.04.2005
(51) Int. Cl.: B60J 7/04

(54) **Kraftfahrzeug mit beweglichen Dachteilen**
Vehicle with movable roof parts
Véhicule avec des parties de toit mobiles

(30) Priorität: 21.04.2004 DE 102004020007
(43) Veröffentlichungstag der Anmeldung: 26.10.2005
(73) Patentinhaber: Wilhelm Karmann GmbH, 49084 Osnabrück (DE)
(72) Erfinder: Kreiling, Nils, 49078 Osnabrück (DE)
(74) Vertreter: Kronthaler, Schmidt & Coll.

(56) Entgegenhaltungen:
- EP-A- 0 803 390
- EP-A- 1 234 702
- EP-A- 1 382 486
- DE-A1- 19 604 855
- DE-A1- 19 738 281
- FR-A- 2 797 813
- FR-A- 2 797 818
- US-A1- 2002 084 678
- US-B1- 6 428 090

## Beschreibung

Die Erfindung betrifft ein Kraftfahrzeug mit einer Fahrzeugkarosserie, die karosseriefeste und zumindest bereichsweise oberhalb von Seitenscheiben erstreckte Dachrahmenteile umfaßt, nach dem Oberbegriff des Anspruchs 1. Ein solches Kraftfahrzeug wird beispielsweise in der US 2002/0084678 beschrieben.

Aus der DE 296 22 436 U1 ist ein Kraftfahrzeug mit einem Steilheck bekannt, das von einem vorderen Windschutzscheibenrahmen bis zum Heck erstreckte obere Dachrahmenteile aufweist, zwischen denen jeweils in sich starre, jedoch bewegliche Dachteile halterbar sind, die aus ihrer geschlossenen Stellung in eine in die Karosserie abgesenkte Offenstellung verlagerbar sind. In Seitenansicht ist dabei aufgrund der festen Dachrahmenteile dem Fahrzeug nahezu nicht anzusehen, ob die Dachteile offen oder geschlossen sind.

Der Erfindung liegt das Problem zugrunde, bei einem Fahrzeug der genannten Art unter weitestgehendem Erhalt der Sicherheit und Karosseriesteifigkeit eine größere Annäherung an ein Cabriolet-Fahrzeug zu erreichen.

Die Erfindung löst dieses Problem durch ein Kraftfahrzeug mit den Merkmalen des Anspruchs 1.

Hinsichtlich weiterer vorteilhafter Ausgestaltungen der Erfindung wird auf die Ansprüche 2 bis 11 verwiesen.

Mit dem erfindungsgemäßen Kraftfahrzeug kann durch den hinteren Vollcabrioletbereich das Freiluftgefühl verbessert werden, wobei gleichzeitig im Bereich des Insassenraums die Sicherheit durch die karosseriefesten Dachrahmenteile erhalten bleibt und diese zudem auch als Auflager und Führungen für dazwischen gehaltene feste Dachteile zur Verfügung stehen können.

Wenn das Kraftfahrzeug vier seitliche Türen aufweist und sich die karosseriefesten Dachrahmenteile bis zu den hinteren Türen unmittelbar nachgeordneten aufragenden Karosseriesäulen erstrecken und direkt heckwärts dieser Säulen der Vollcabriolet-Bereich anfängt, ist das Freiluftgefühl auch für große Wagenkörper, beispielsweise von Geländewagen, optimiert, ohne daß Abstriche bei Sicherheit und Geschlossenfahrkomfort gemacht werden müssen. Zudem ist die Seitenansicht verbessert, da statt der nach hinten durchgehenden Dachrahmen diese nunmehr an der hinteren Karosseriesäule enden und eine leichter wirkende Silhouette nach Art eines Stufenheckfahrzeugs entsteht. Zwischen den seitlichen Rahmenteilen muß je nach Fahrzeugausmaßen kein Querträger liegen, sondern der Raum kann bei abgesenkten Dachteilen mit dem hinteren Vollcabriolet-Bereich in nicht unterbrochener Verbindung stehen, was das Freiluftgefühl verbessert.

Insbesondere wenn zumindest zwei im wesentlichen plattenförmige Dachteile vorgesehen sind, die in geschlossener Stellung hintereinander liegen, wobei das vordere Dachteil nach Art eines Schiebedachs über oder unter das hintere verlagerbar ist, ist die Flexibilität der Dachöffnung erhöht. Im Unterschied zu beispielsweise einem durchgehenden textil bezogenen Dach können die vorderen starren Dachteile dann einzeln gegeneinander oder auch vollständig geöffnet werden, wobei vorteilhaft auch bei vollständig geöffneten Dachteilen der hintere Dachabschnitt geschlossen werden kann, so daß dann nur ein Ausschnitt nach Art eines übergroßen Schiebedachs freigegeben ist, etwa über einer vorderen und einer hinteren Sitzreihe.

Sofern die starren Dachteile horizontal ablegbar sind und die Heckscheibe in Offenstellung des hinteren Dachabschnitts über diesen nach Art eines Deckels ablegbar ist, ergibt sich eine raumsparende Packstellung, die zudem durch die aufliegende Heckscheibe gut nach oben gegen äußere Einwirkungen geschützt ist. Das Paket aus Dachteilen und hinterem Dachabschnitt kann im Bereich einer Brüstungskante der Karosserie gehalten sein und somit auch einen darunter befindlichen Kofferraum nach oben schützend abdecken.

Eine Maximierung der Flexibilität der Dachöffnung ergibt sich, wenn der hintere Dachabschnitt bei geöffneten Dachteilen, nach Art eines Schiebedachs geöffnetem vorderen Dachteil oder bei geschlossenen Dachteilen in seine Offen- oder Schließstellung überführbar ist.

Die Ablage der Heckscheibe nach Art eines Dekkels kann konstruktiv sehr einfach und elegant erreicht werden, wenn diese über ein mehrere Baugruppen unterschiedliche bewegendes Getriebe steuerbar ist, wodurch sichergestellt ist, daß zumindest während eines Teils einer Öffnung-oder Schließbewegung von mit dieser verbundenen Teilen ein Stillstand der Heckscheibe ermöglicht ist, also beispielsweise ein vorgelagerter Spriegel schon bewegbar ist, ohne daß die Heckscheibe bereits ihre Lage verändert, und die Ablage der Heckscheibe dann über dem bereits weitgehend eingefalteten Spriegel erfolgen kann. Dennoch ist auch dann für die Gesamtbewegung aller Teile nur ein Antriebsorgan erforderlich.

Weitere Vorteile und Merkmale der Erfindung ergeben sich aus in der Zeichnung zumindest schematisch dargestellten und nachfolgend beschriebenen Ausführungsbeispielen des Gegenstandes der Erfindung.

In der Zeichnung zeigt:
- Fig. 1: eine perspektivische Gesamtansicht eines erfindungsgemäßen Kraftfahrzeugs mit geschlossenen Dachteilen und geschlossenem hinterem Dachabschnitt, der Übersicht halber ohne Bezug gezeichnet,

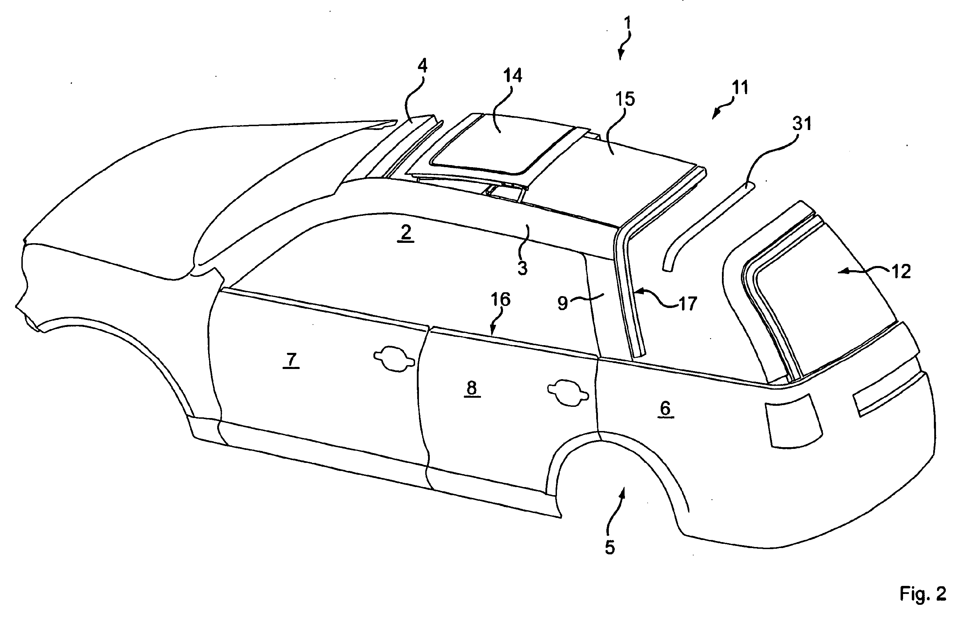

- Fig. 2: eine ähnliche Ansicht wie Fig. 1 bei Verlagerung eines vorderen plattenförmigen Dachteils über das dahinter liegende nach Art eines Schiebedachs,
- Fig. 3: eine ähnliche Ansicht wie Fig. 2 mit vollständig geöffnetem Schiebedach und geschlossenem hinterem Dachabschnitt,

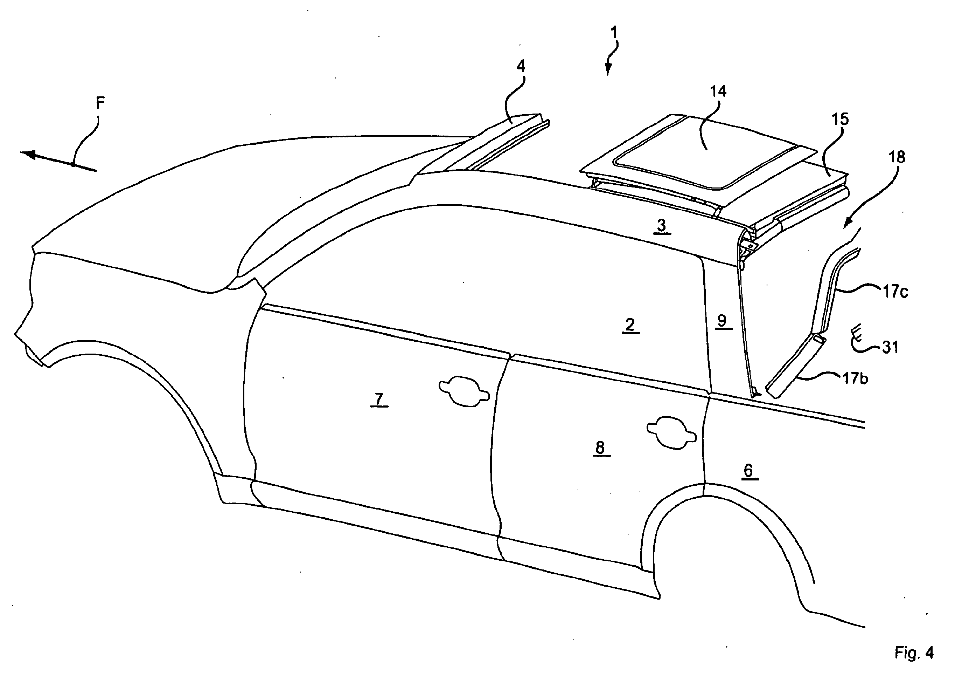

- Fig. 4: eine ähnliche Ansicht wie Fig. 3 bei beginnender Öffnung des hinteren Dachabschnitts,
- Fig. 5: eine Seitenansicht des Fahrzeugs nach Fig. 4 während des Absenkens der vorderen Dachteile bei teilweise geöffnetem hinterem Dachabschnitt,
- Fig. 6: eine Ausschnittsvergrößerung des Fahrzeugheckbereichs in Seitenansicht während der Ablagephase der Dachteile,
- Fig. 7: eine ähnliche Ansicht wie Fig. 6 bei in Öffnungsstellung vollständig horizontal abgelegten Dachteilen,
- Fig. 8: eine ähnliche Ansicht wie Fig. 7 nach Schließen des hinteren Dachabschnitts über den abgelegten Dachteilen,
- Fig. 9: eine ähnliche Ansicht wie Fig. 7 nach Öffnen des hinteren Dachabschnitts und seiner Ablage über den geöffneten Dachteilen,
- Fig. 10a: eine Fahrzeuggesamtansicht mit geschlossenen Dachteilen und geöffnetem hinterem Dachabschnitt,
- Fig. 10b: eine Fahrzeuggesamtansicht mit nach Art eines Schiebedachs geöffnetem vorderem Dachteil und geöffnetem hinterem Dachabschnitt,
- Fig. 11 - Fig. 16: Einzelheiten der Öffnungsphase des hinteren Dachabschnitts, darin

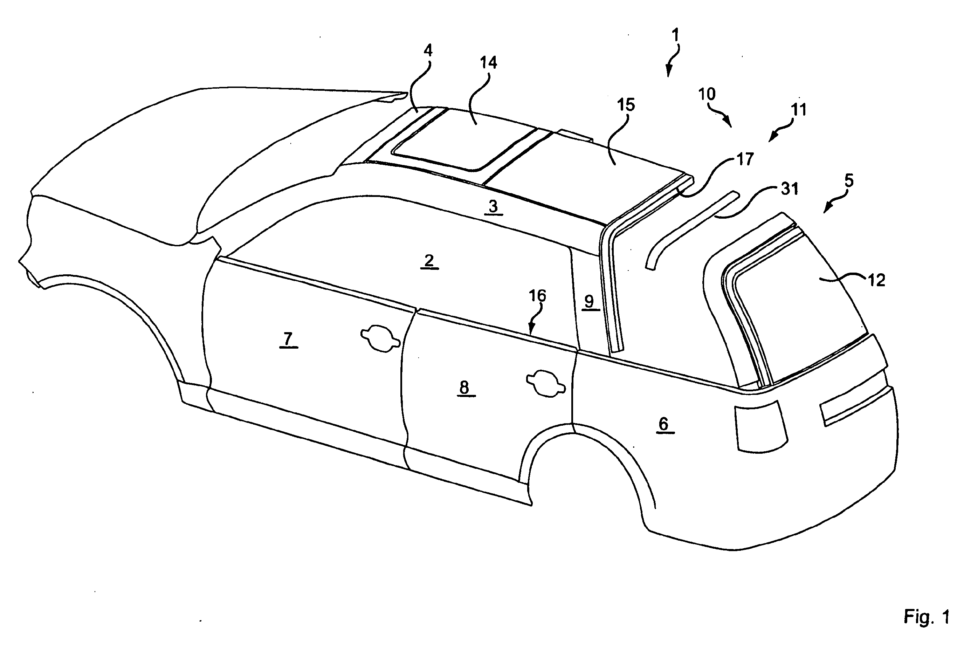

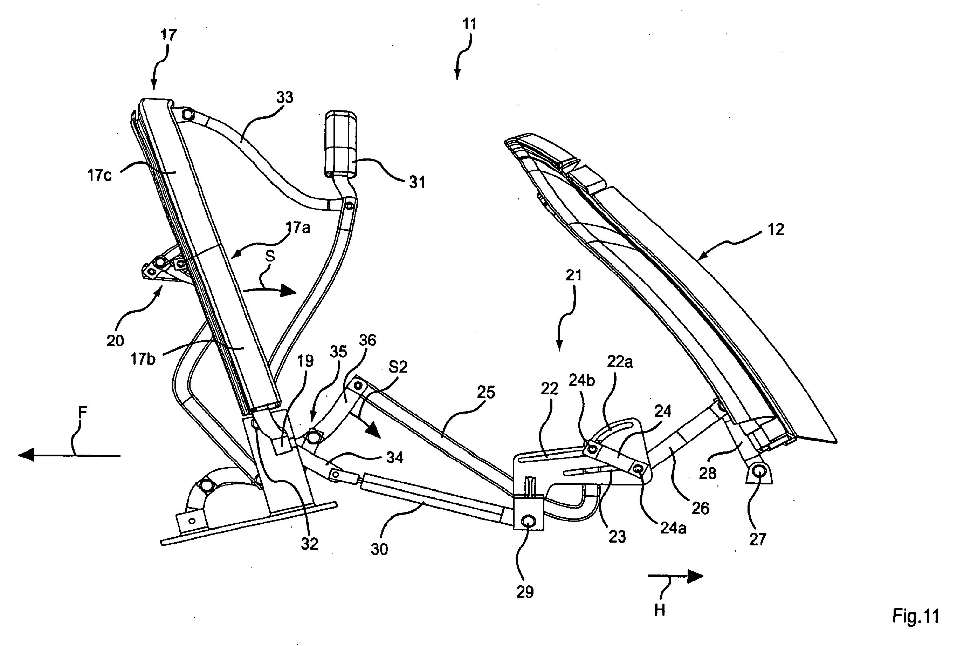

- Fig. 11: den hinteren Dachabschnitt in der geschlossenen Stellung nach Fig. 1, der Übersicht halber ohne Bezug gezeichnet,

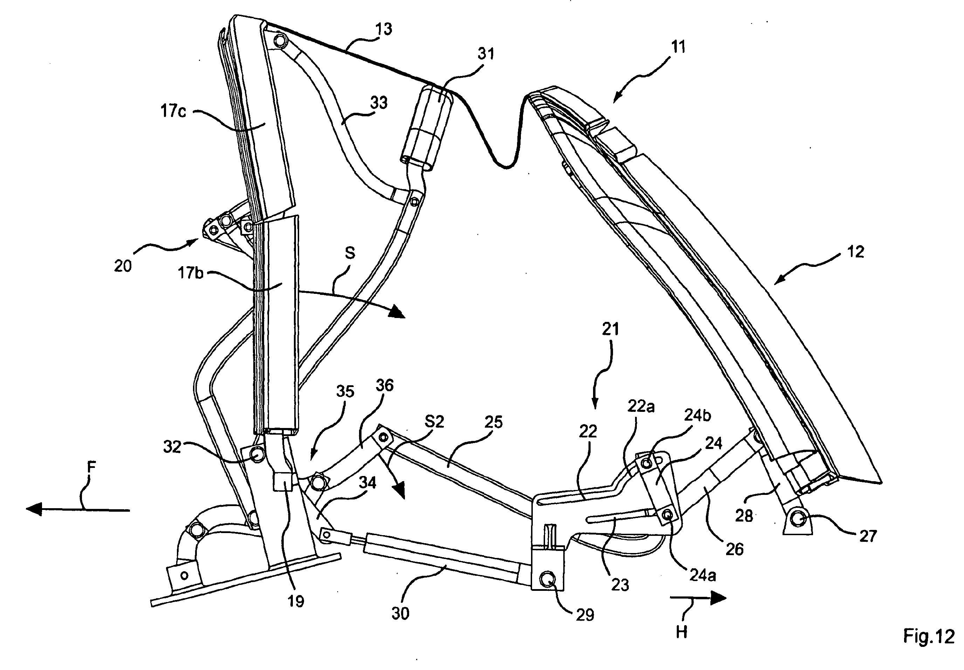

- Fig. 12: eine ähnliche Ansicht wie Fig. 11 bei beginnender Öffnung des hinteren Dachabschnitts mit einknickendem ersten Spriegel und noch in Ausgangsstellung stehender Heckscheibe,

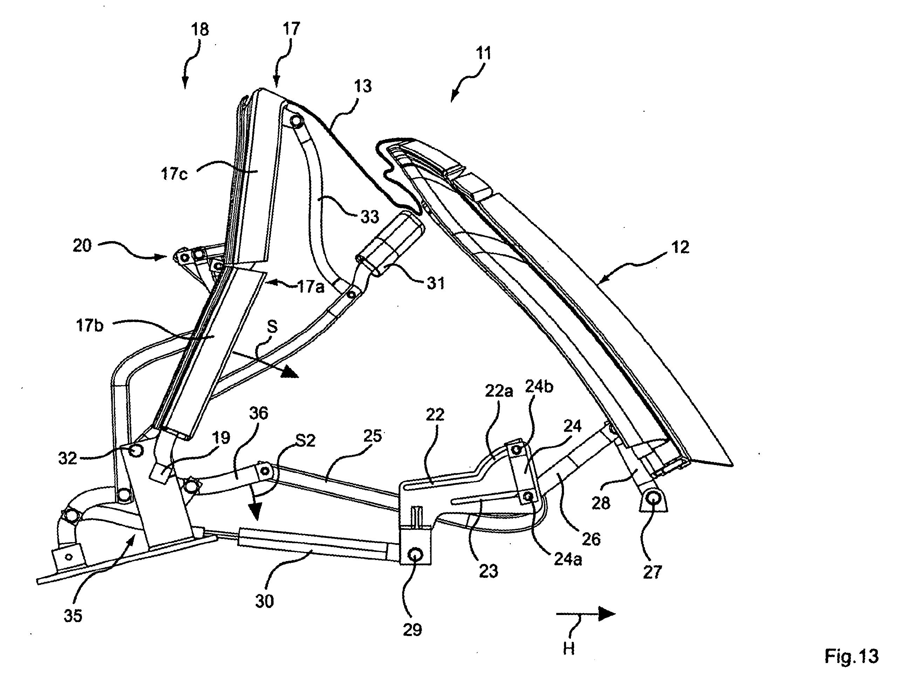

- Fig. 13: eine ähnliche Ansicht wie Fig. 12 bei weiter fortschreitender Öffnung des hinteren Dachabschnitts mit einknickendem ersten Spriegel und noch in Ausgangsstellung stehender Heckscheibe,

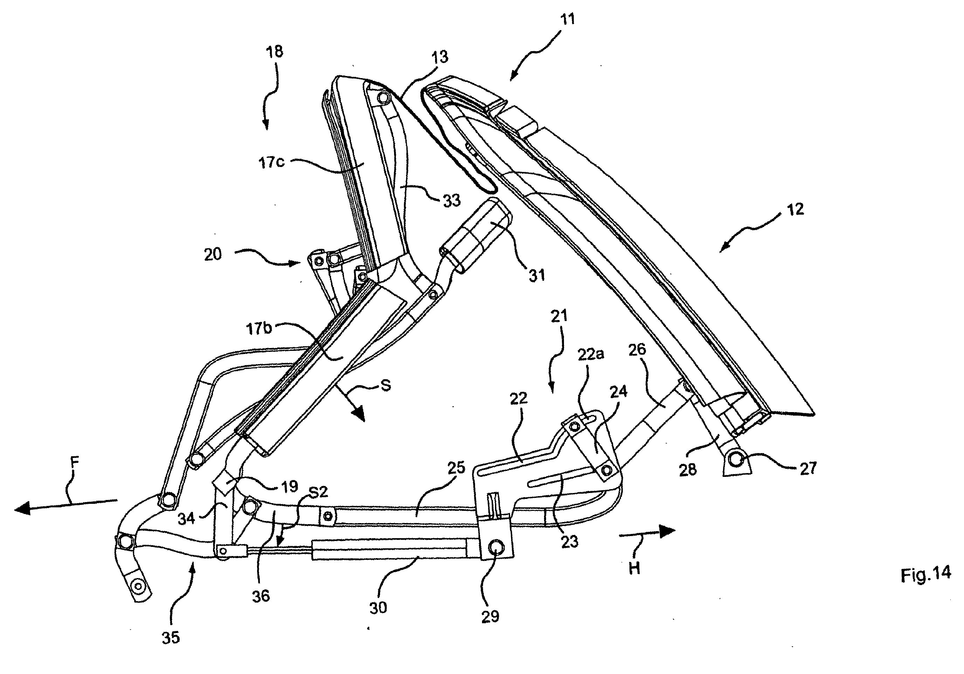

- Fig. 14: eine ähnliche Ansicht wie Fig. 13 bei weitergehender Öffnung des hinteren Dachabschnitts mit einknickendem ersten Spriegel und noch in Ausgangsstellung stehender Heckscheibe,

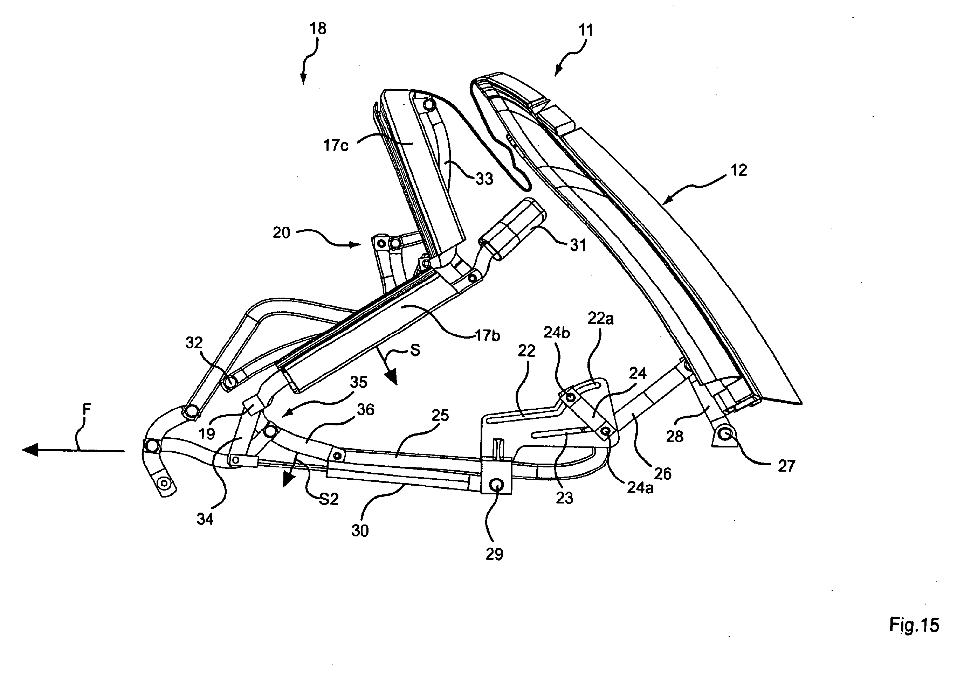

- Fig. 15: eine ähnliche Ansicht wie Fig. 14 bei weiter einknickendem erstem Spriegel und einschwenkender Heckscheibe,

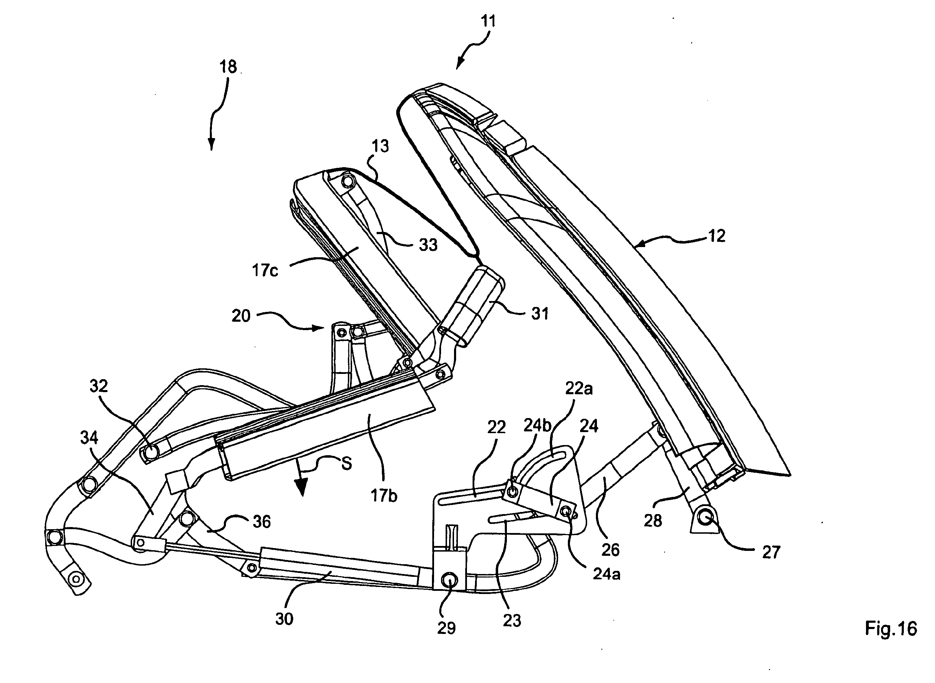

- Fig. 16: eine ähnliche Ansicht wie Fig. 15 bei weiter einknickendem erstem Spriegel und einschwenkender Heckscheibe,

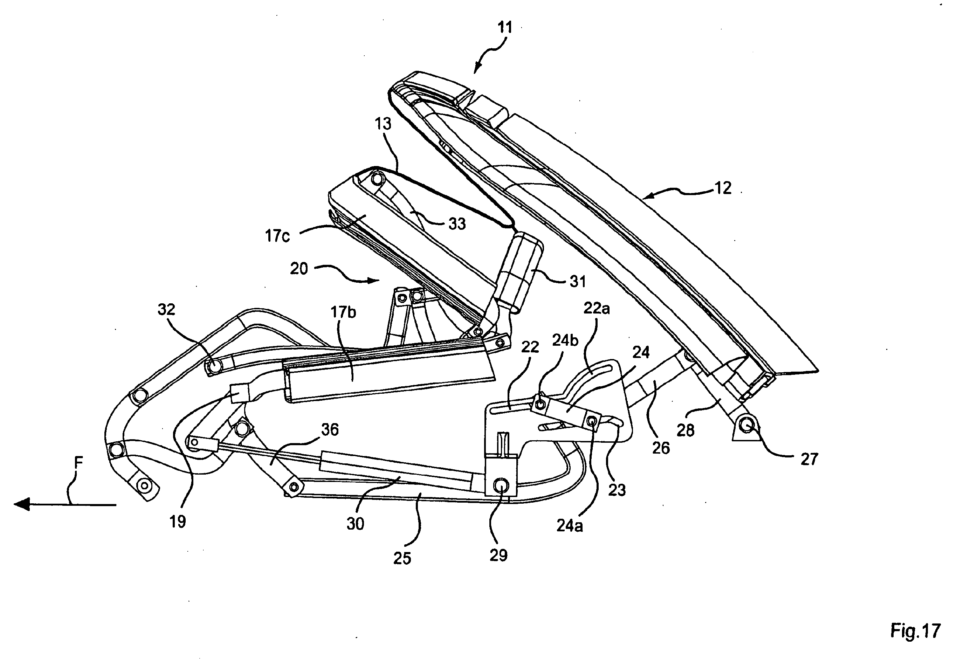

- Fig. 17: eine ähnliche Ansicht wie Fig. 16 bei weiter einknickendem erstem Spriegel und einschwenkender Heckscheibe,

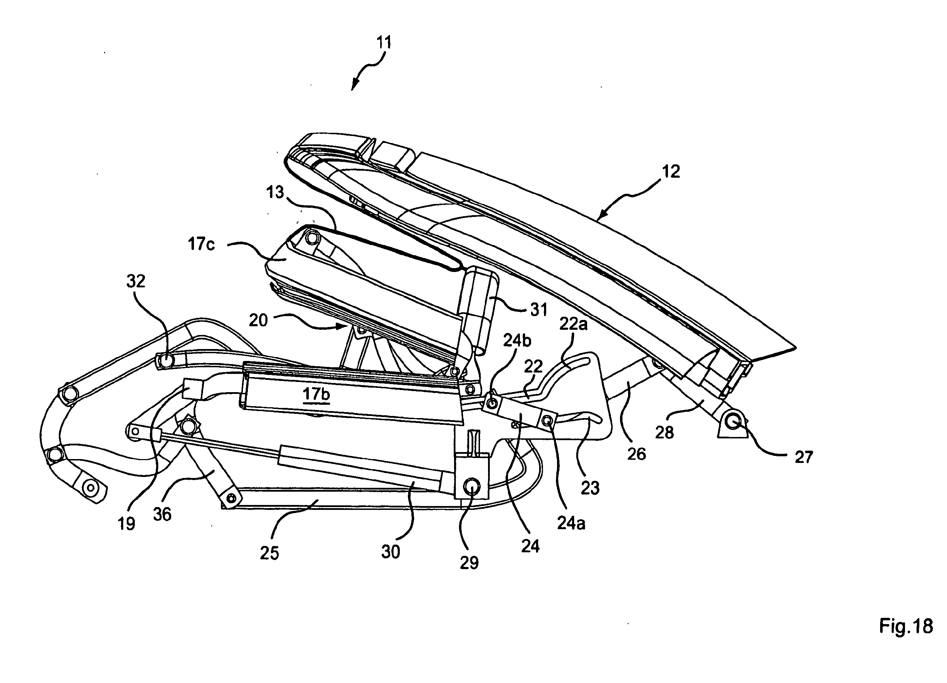

- Fig. 18: eine ähnliche Ansicht wie Fig. 17 bei weiter einknickendem erstem Spriegel und einschwenkender Heckscheibe,

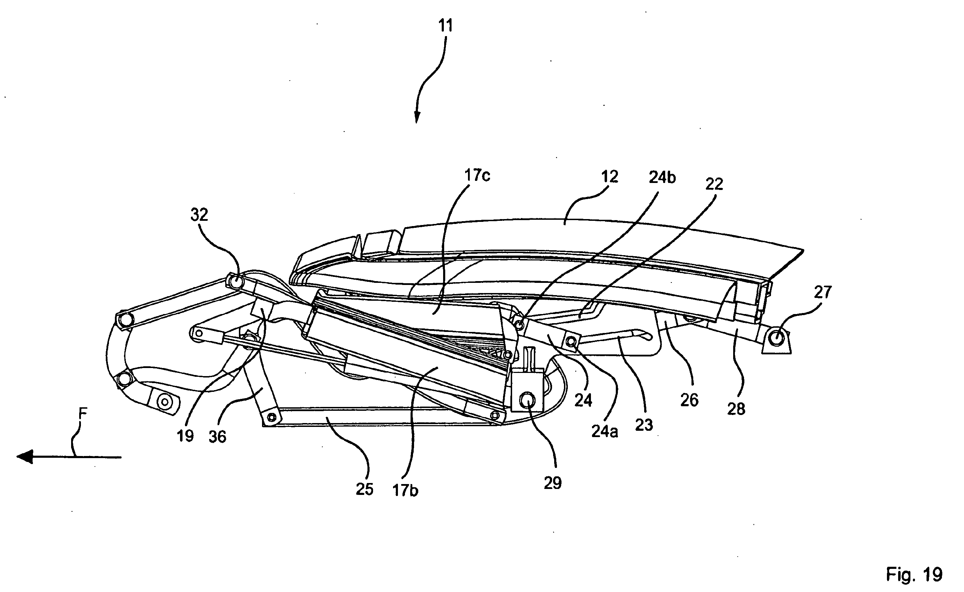

- Fig. 19: eine ähnliche Ansicht wie Fig. 18 bei vollständig geöffnetem hinterem Dachabschnitt,

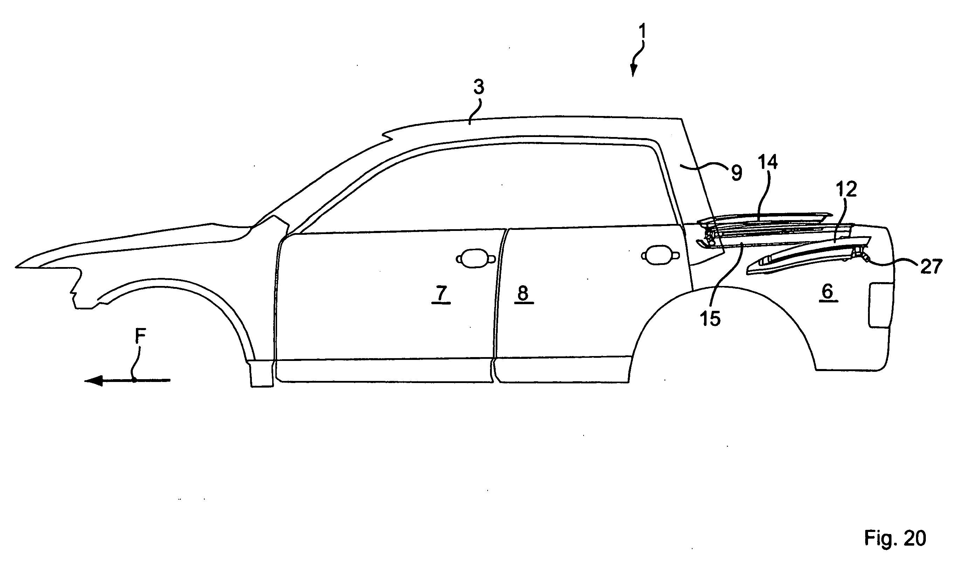

- Fig. 20: eine Seitenansicht einer alternativen Ausführungsform mit einem ungeteilten Spriegel im hinteren Dachabschnitt.

In den Zeichnungsfiguren ist generell ein mit einer Rückbank versehenes vier- oder fünfsitziges Kraftfahrzeug 1 dargestellt. Dies ist nicht zwingend. Auch kann beispielsweise ein Zweisitzer erfindungsgemäß ausgebildet sein.

Das Fahrzeug 1 umfaßt zumindest oberhalb seitlicher Scheiben 2 in sich jeweils starre Dachrahmenteile 3, die in Ansicht von oben im wesentlichen längs zur Fahrzeugerstreckung zwischen einem Windschutzscheibenrahmen 4 und dem Heckbereich 5 des Fahrzeugs liegen. Diese sind Bestandteil der Fahrzeugkarosserie 6.

Das Kraftfahrzeug 1 weist hier vier seitliche Türen 7, 8 auf, wobei sich die Dachrahmenteile 3 vom Windschutzscheibenrahmen 4 bis zu den hinteren Türen 8 unmittelbar nachgeordneten und nahezu vertikal aufragenden Karosseriesäulen 9 erstrecken.

Im hinteren Fahrzeugbereich 5, beginnend hinter den Karosseriesäulen 9, schließt sich ein Vollcabrioletbereich 10 mit einem beweglichen hinteren Dachabschnitt 11 an. Dieser umfaßt eine Heckscheibe 12, die hier von einem den Dachabschnitt 11 außerhalb der Heckscheibe 12 vollständig überspannenden Bezug 13 umgeben ist.

Auch andere Ausbildungen des Dachabschnitts 11 sind möglich.

Das Fahrzeug 1 umfaßt weiter im gezeichneten Ausführungsbeispiel in Fahrtrichtung F an den hinteren Dachabschnitt 11 angrenzend und diesem vorgeordnet weitere bewegliche Dachteile 14, 15. Ihre Anzahl ist je nach Dachlänge variabel; sie liegen im geschlossenen Zustand im wesentlichen horizontal, fluchtend hintereinander und stützen sich unmittelbar oder mittelbar an den seitlichen Dachholmen 3 ab. Die - hier zwei - Dachteile 14, 15 können aus unterschiedlichen Materialien, etwa metallischen, Glas- oder Kunststoffwerkstoffen, gebildet sein. Insbesondere können sie im wesentlichen transparent ausgebildet sein.

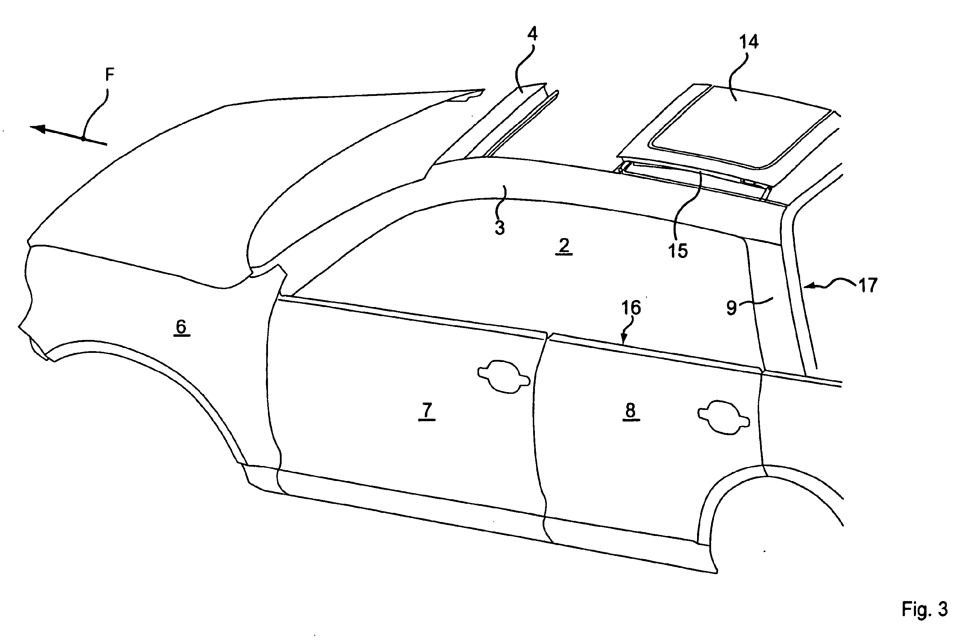

Das vordere Dachteil 14 ist aus der geschlossenen Stellung heraus nach Art eines Schiebedachs über das dahinter liegende Dachteil 15 verlagerbar und liegt in seiner geöffneten Stellung im wesentlichen parallel auf diesem (Fig. 3 ff.). Die so gebildete Stellung der Dachteile 14, 15 stellt eine mögliche dauerhafte Fahrstellung dar. Aus ihr heraus kann jedoch auch eine weitere Dachöffnung mit Abwärtsverlagerung der als Paket übereinanderliegenden Dachteile 14, 15 erfolgen, um diese in die Karosserie 6 abzusenken, wobei die karosseriefesten Seitenrahmen 3 stehenbleiben und somit die Überschlagsicherheit für die Insassen erhalten bleibt. Ein die Seitenrahmen 3 verbindender Querträger kann insbesondere bei langen Insassenräumen vorgesehen sein. Die Dachteile 14, 15 liegen im gezeichneten Ausführungsbeispiel im geöffneten, abgelegten Zustand zumindest nahezu horizontal unterhalb der die Unterkante der Seitenscheiben 7, 8 bildenden Fensterbrüstungslinie 16.

Das Fahrzeug 1 erlaubt eine Vielzahl von dauerhaften Öffnungszuständen des Daches:

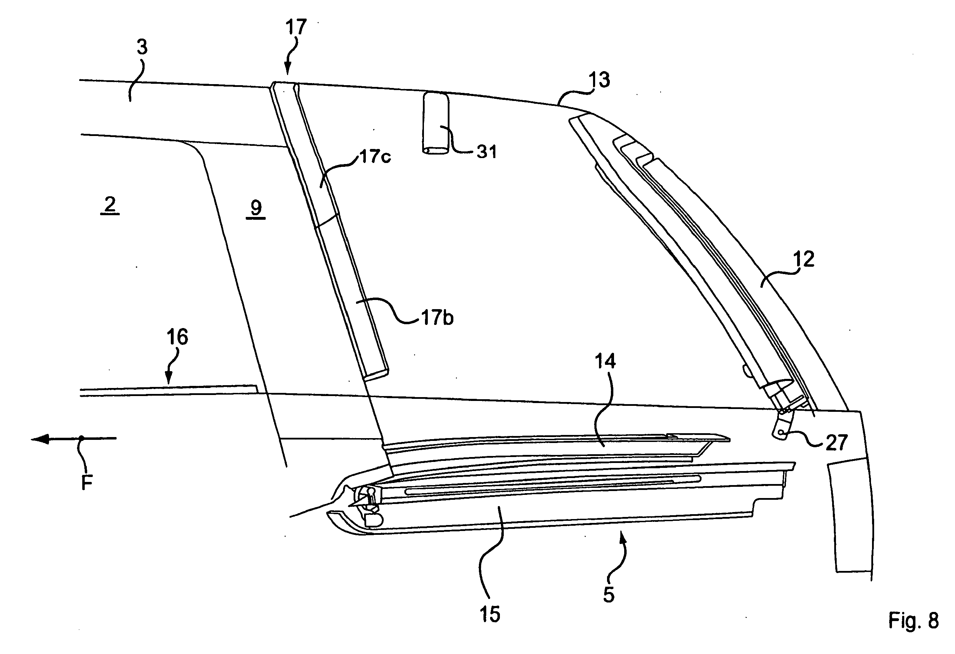

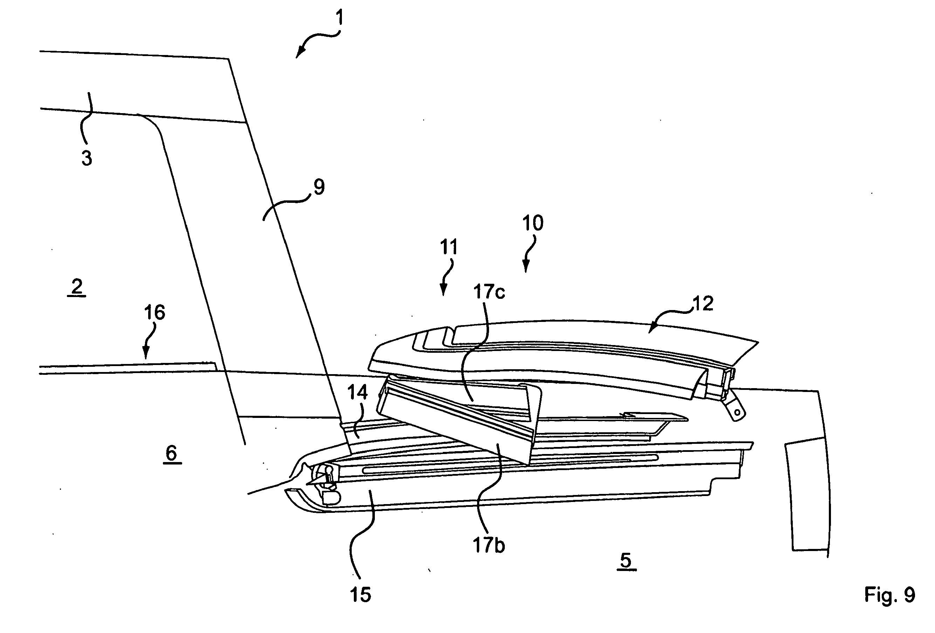

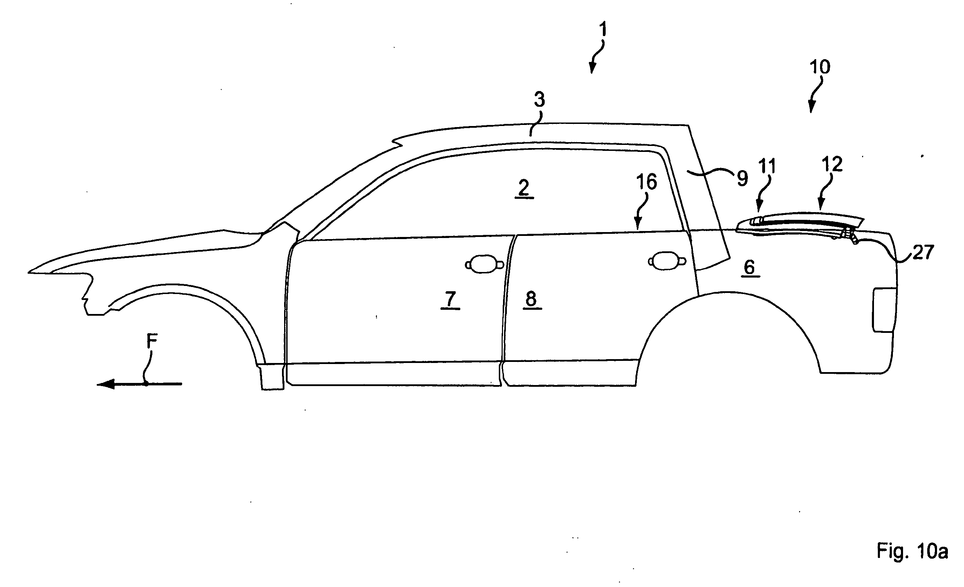

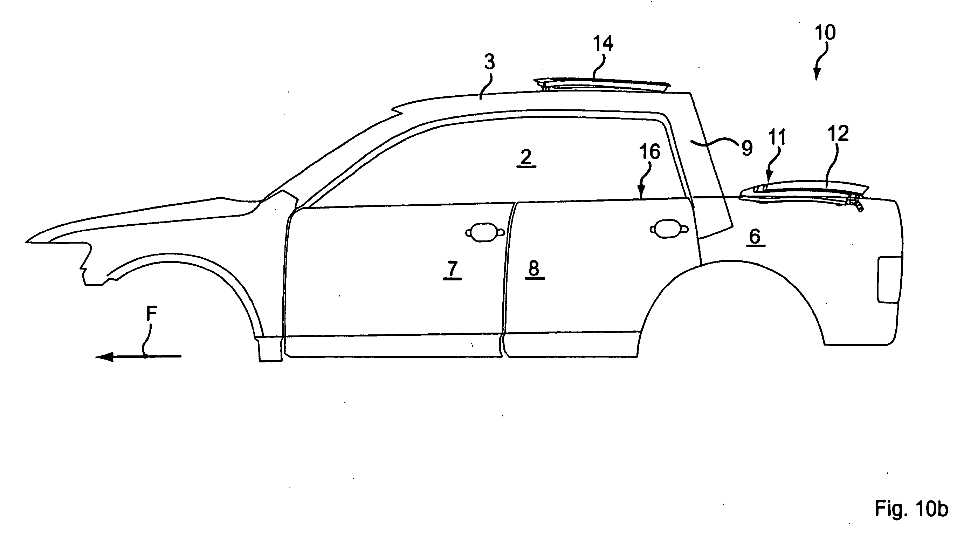

zunächst eine vollständig geschlossene Stellung von Dachteilen 14, 15 und hinterem Dachabschnitt 11 (Fig. 1); des weiteren eine nach Art eines Schiebedachs geöffnete oder eine vollständig geöffnete und in der Karosserie 6 abgelegte Stellung der Dachteile 14, 15 bei geschlossenem hinterem Dachabschnitt 11 (Fig. 8); die vollständig geöffnete Stellung der Dachteile 14, 15 mit darüber geöffnetem hinterem Dachabschnitt 11, so daß der hinter den Karosseriesäulen 9 liegende Karosseriebereich 5 wie bei einem Vollcabriolet geöffnet ist (Fig. 9). Schließlich kann auch nur der hintere Dachabschnitt 11 nach Art eines Landaulet-Fahrzeugs geöffnet werden, während die Dachteile 14, 15 geschlossen verbleiben oder in der nach Art eines Schiebedachs geöffneten Stellung liegen (Fig. 10a, Fig. 10b).

Die Dachteile 14, 15 können daher beispielsweise aus der Anfangsposition des geschlossenen hinteren Dachabschnitts 11 nach Fig. 1 sowohl in ihre geöffnete Schiebedachstellung nach Fig. 3 als auch in ihre abgelegte vollständige Öffnungsstellung nach Fig. 8 und Fig. 9 verlagert werden.

Für die Schiebedachöffnung (Übergang von Figur 1 zu Figur 3) braucht dabei der hintere Dachabschnitt 11 nicht bewegt zu werden. Der vordere Dachteil 14 fährt lediglich über den dahinter liegenden Dachteil 15. Beide Dachteile 14, 15 haben dabei vorzugsweise in Fahrzeuglängsrichtung eine ähnliche Erstreckung.

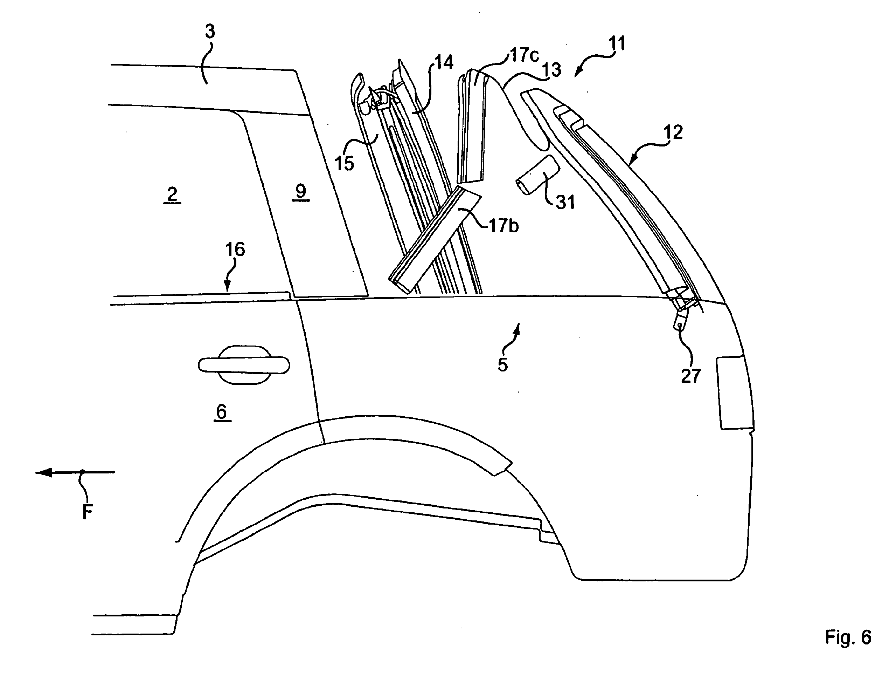

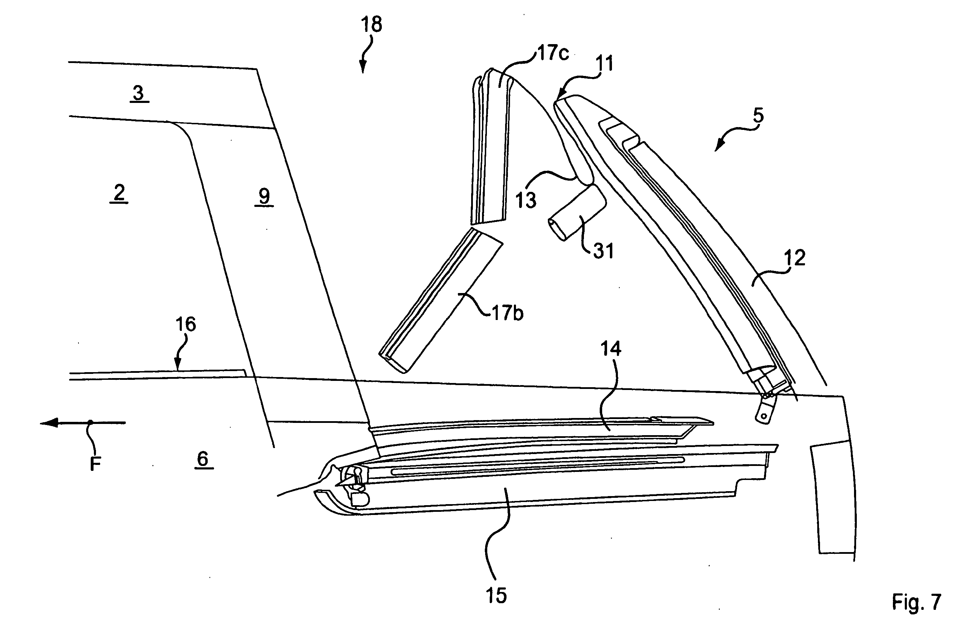

Für die vollständige Öffnung der Dachteile 14, 15 sind diese an einem gemeinsamen Gestänge gehalten, mit dessen Hilfe sie aus der übereinander liegenden Paketstellung zunächst in eine nahezu vertikale Lage verkippt werden (Fig. 6) und anschließend in ihre horizontale Packstellung im Bereich der Fensterbrüstungslinie 16 rückverschwenkt werden (Fig. 7 - Fig. 9).

Während des Ablage der Dachteile 14, 15 braucht der hintere Dachabschnitt 11 nicht vollständig geöffnet zu sein, sondern es genügt die Öffnung des vorderen Spriegels 17, der in seiner geschlossenen Stellung (Fig. 1) mit seinen Seitenschenkeln 17a an den aufragenden Karosseriesäulen 9 dichtend anliegt. Der Spriegel 17 ist in seinen seitlichen Schenkeln 17a in einen unteren Abschnitt 17b und einen oberen Abschnitt 17c zweigeteilt.

Für die Freigabe der Durchtrittsöffnung 18 kann der Spriegel 17 um eine horizontale, quer zum Fahrzeug gelegene und karosseriefeste Achse 19 in Richtung des Pfeils S verschwenken. Gleichzeitig kann der obere Teil 17c um die den Seitenschenkeln 17a zugeordnete Gelenkanordnung 20 einknicken.

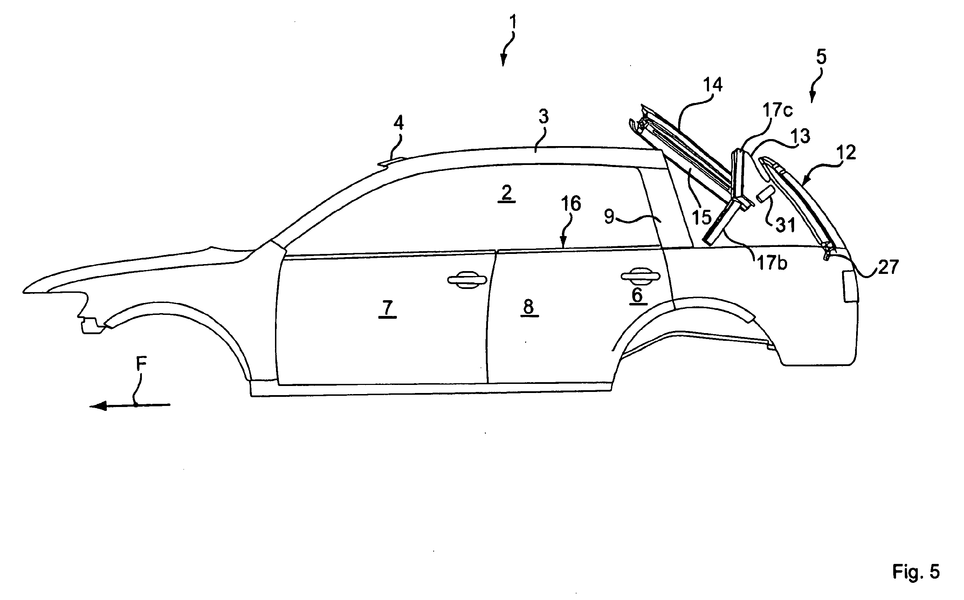

Die Heckscheibe 12 kann bei dem Durchtritt der Dachteile 14, 15 durch den teilweise geöffneten Dachabschnitt 11 ihre ursprüngliche Lage wie bei dem nach Fig. 1 geschlossenen Dach beibehalten (Fig. 5, Fig. 6), wozu ein mehrere Baugruppen unterschiedliche bewegendes Getriebe 21, häufig auch als Stillstandgetriebe bezeichnet, vorgesehen ist. Dieses ist hier als Kurvengetriebe ausgebildet und ermöglicht den Stillstand eines angeschlossenen Getriebeglieds bei gleichzeitiger Bewegung eines anderen Getriebeglieds. Das Getriebe 21 umfaßt pro Fahrzeugseite zwei Kulissen 22, 23, in denen ein gemeinsamer Verbindungshebel 24 geführt ist. Dieser ist einenends mit einem Steuerhebel 25 und anderenends über einen Zwischenhebel 26 mit einem die Heckscheibe 12 um eine heckseitige, karosseriefeste Achse 27 schwenkenden Hebel 28 jeweils gelenkig verbunden.

Die Kulissen 22, 23 sind karosseriefest angebunden, ebenso wie eine Lagerstelle 29 für ein Antriebsorgan 30, hier einen Hydraulikzylinder, der anderenends einen Schwenkhebel 34 betätigt, mit dem der untere Bereich 17b des Spriegels 17 um die karosseriefeste Lagerstelle 19 in oder gegen Richtung des Pfeils S schwenkbar ist. Bei geschlossenem Dachabschnitt 11 (Fig. 11) ist der Hydraulikzylinder 30 eingefahren.

Neben dem einknickenden Spriegel 17 ist zur Unterstützung des Dachbezugs 13 noch ein weiterer Spriegel 31 vorgesehen, der an dem oberen Bereich 17c des Spriegels 17 über einen Hebel 33 schwenkbar gelagert ist und mit einem weiteren, um eine karosseriefeste Lagerstelle 32 schwenkbaren Steuerhebel verbunden ist.

Das Antriebsorgan 30 ist über eine Hebelanordnung 35 mit dem Steuerhebel 25 für das hintere Getriebe 21 verbunden. Der Steuerhebel 25 ist dabei das vermittelnde Teil zwischen der Bewegung der Spriegel 17, 31 einerseits und der weiter hinten liegenden Einheit der Heckscheibe 12 andererseits. Die Hebelanordnung 35 bewirkt, daß in einer ersten Phase der Öffnungsbewegung (Fig. 11 bis Fig. 13) der Steuerhebel 25 heckwärts in Richtung des Pfeils H verlagert und bei weiterem Fortschreiten der Öffnung (Fig. 14 bis Fig. 19) mit einer Komponente in Fahrtrichtung F nach vorne gezogen wird. Weiterhin ist über die Hebelanordnung 35 auch die als Vorgelegegetriebe ausgebildete Gelenkanordnung 20 gesteuert, wodurch unmittelbar mit dem Schwenken des unteren Spriegelabschnitts 17b auch das Einknicken des oberen Spriegelabschnitts 17c beginnt.

Zur Freigabe der Durchtrittsöffnung 18 wird daher das Antriebsorgan 30 ausgefahren, wodurch einerseits der untere Spriegelabschnitt 17b in Richtung des Pfeils S schwenkt und andererseits der mit dem Steuerhebel 25 verbundene Ausleger 36 der Hebelanordnung 35 in Richtung des Pfeils S2 nach hinten und unten schwenkt. Dadurch wird einerseits über die Gelenkanordnung 20 der obere Spriegelteil 17c eingeschwenkt, andererseits wird der Steuerhebel 25 mit einer nach hinten weisenden Komponente (Pfeil H) verlagert.

Durch die Rückwärtsbewegung des Steuerhebels 25 ist der in den beiden Kulissen 22, 23 gehaltene Verbindungshebel 24 tendenziell bestrebt, heckwärts verlagert zu werden. Der Verbindungshebel 24 ist jedoch bereits zu Beginn der Bewegung, bei geschlossenem Dachabschnitt 11 (Fig. 11), mit seinem in der unteren Kulisse 23 geführten Ende 24a in einer hinteren Anschlagposition, kann also nur noch mit dem in der Kulisse 22 geführten Ende 24b verlagert werden. Dieses Ende schwenkt im Übergang von Fig. 11 zu Fig. 12 und Fig. 13 in dem Kreisbogensegment 22a der Kulisse 22 um das festgehaltene Ende 24a. Da der Hebel 26 zur Heckscheibe 12 mit diesem Ende 24a verbunden ist, verändert sich deren Lage während dieses Verschwenkens des Hebels 24 nicht, obwohl der Spriegel 17 während dieser Phase erheblich abwärts schwenkt und einknickt.

Etwa in dieser Stellung können die Dachteile 14, 15 durch die Öffnung 18 gemäß den Figuren 5 bis 7 abgelegt werden.

Soll der hintere Dachabschnitt 11 weiter geöffnet werden (Fig. 9), wird bei weiterem Ausschub des Antriebsorgans 30 der Steuerhebel 25 über die Hebelanordnung 35 in Fahrtrichtung F gezogen und dabei zunächst (Fig. 14 bis Fig. 16) das Ende 24b des Hebels 24 in dem Kreisbogensegment 22a wieder in seine Ausgangsposition rückverlagert. Das Ende 24a bleibt dabei in seiner Endposition, da hier die Kulisse 23 abgeknickt ist (sh. z. B. Fig. 18). Bis zu der Stellung nach Fig. 16 verharrt dabei weiterhin die Heckscheibe 12 im Stillstand.

Ab da wird (Fig. 17 - Fig. 19) mit weiterem Ausschub des Antriebsorgans 30 über das Vorgelegegetriebe 35 der Steuerhebel 25 derart in Fahrtrichtung F gezogen, daß nun der Verbindungshebel 24 mit beiden Enden 24a, 24b in den Kulissen 23, 22 nach vorne gezogen wird, was zur Folge hat, daß dann über den Hebel 26 die Heckscheibe 12, die fest mit dem Hebel 28 verbunden ist, zum Einschwenken um das Gelenk 27 gezwungen wird, so daß sie sich flach und horizontal auf den eingeknickten Spriegel 17, dessen oberes Ende 17c in Fahrtrichtung F weist, legt. Sofern die in den Figuren 11 bis 19 nicht eingezeichneten Dachteile 14, 15 mit abgelegt wurden, überdeckt dann die Heckscheibe 12 nach Art eines Deckels auch diese horizontal abgelegten Dachteile 14, 15 (Fig. 9).

In einem alternativen Ausführungsbeispiel (Fig. 20) ist der Spriegel 17 insgesamt einstückig und kann zur Öffnung des hinteren Dachabschnitts 11 einfach nach hinten weggeschwenkt werden, wobei die Heckscheibe 12 dann darunter abtaucht. Die vorderen Plattenteile 14, 15 können wie oben zunächst horizontal abgelegt werden, ehe der Dachabschnitt 11 vollständig öffnet und darüber abgelegt wird, wie in Fig. 21 dargestellt ist. Ebenso ist es möglich, den Dachabschnitt 11 ganz zu öffnen und die Dachteile 14, 15 dann obenauf abzulegen. Eine separate Abdeckung, etwa eine Persenning, kann vorgesehen sein. Auch hier sind die Dachteile 14, 15 unabhängig vom hinteren Dachabschnitt 11 zu bewegen, so daß sich die Vielzahl der oben aufgeführten Öffnungszustände ergibt. Die Dachrahmenteile 3 bleiben als Schutz des Insassenraums voll erhalten.

Die Erfindung ist sowohl bei Fahrzeugen mit manuell zu bewegenden Dachteilen 14, 15, 11 als auch bei voll- oder teilautomatischer Beweglichkeit der Teile anwendbar.

## Patentansprüche

1. Kraftfahrzeug (1) mit einer Fahrzeugkarosserie (6), die karosseriefeste und zumindest bereichsweise oberhalb von Seitenscheiben (2) erstreckte seitliche Dachrahmenteile (3) umfaßt, zwischen denen in eine abgesenkte Öffnungsstellung bewegliche und zumindest im wesentlichen plattenförmige Dachteile (14;15) halterbar sind, wobei an den Bereich mit karosseriefesten Dachrahmenteilen (3) heckwärts ein Vollcabrioletbereich (10) anschließt, der einen in seiner Offenstellung den Raum oberhalb einer Karosseriebrüstungslinie (16) vollständig freigebenden hinteren Dachabschnitt (11) umfaßt,
**dadurch gekennzeichnet,**
**daß** der hintere Dachabschnitt (11) eine zumindest seitlich von flexiblen Bezugbereichen (13) umgebene Heckscheibe (12) umfaßt, die in Offenstellung des Dachabschnitts (11) zumindest nahezu horizontal über den in Offenstellung liegenden Dachteilen (14;15) nach Art eines Deckels gehalten ist.

2. Kraftfahrzeug (1) nach Anspruch 1,
**dadurch gekennzeichnet,**
**daß** dieses vier seitliche Türen (7;8) aufweist und sich die Dachrahmenteile (3) bis zu den hinteren Türen (8) unmittelbar nachgeordneten aufragenden Karosseriesäulen (9) erstrecken und direkt heckwärts dieser Säulen (9) der Vollcabriolet-Bereich (10) anfängt.

3. Kraftfahrzeug (1) nach einem der Ansprüche 1 oder 2,
**dadurch gekennzeichnet,**
**daß** zumindest zwei im wesentlichen plattenförmige Dachteile (14;15) vorgesehen sind, die in geschlossener Stellung hintereinander liegen, wobei das vordere Dachteil (14) nach Art eines Schiebedachs über oder unter das hintere (15) verlagerbar ist.

4. Kraftfahrzeug (1) nach einem der Ansprüche 1 bis 3,
**dadurch gekennzeichnet,**
**daß** die Dachteile (14;15) aus ihrer zwischen den Rahmenteilen (3) liegenden Stellung in eine zumindest bereichsweise unterhalb der Verlängerung (16) der Unterkante der Seitenscheiben (2) liegende Öffnungsstellung verlagerbar sind.

5. Kraftfahrzeug (1) nach einem der Ansprüche 3 oder 4,
**dadurch gekennzeichnet,**
**daß** der hintere Dachabschnitt (11) bei geöffneten Dachteilen (14;15), nach Art eines Schiebedachs geöffnetem vorderen Dachteil (14) oder bei geschlossenen Dachteilen (14;15) in seine Offen- oder Schließstellung überführbar ist.

6. Kraftfahrzeug (1) nach einem der Ansprüche 1 bis 5,
**dadurch gekennzeichnet,**
**daß** die zumindest nahezu plattenförmigen Dachteile (14;15) in einer teilweise geöffneten Stellung des hinteren Dachabschnitts (11) in ihre Offenstellung verlagerbar sind.

7. Kraftfahrzeug (1) nach einem der Ansprüche 1 bis 6,
**dadurch gekennzeichnet,**
**daß** der hintere Dachabschnitt (11) einen im wesentlichen U-förmigen Spriegel (17) umfaßt, der einen quer zum Fahrzeug liegenden Mittelschenkel umfaßt und in seinen Seitenschenkeln (17a) einknickbar ist.

8. Kraftfahrzeug (1) nach Anspruch 7,
**dadurch gekennzeichnet,**
**daß** der Spriegel (17) in geschlossener Stellung an die die karosseriefesten Dachrahmen (3) im hinteren Bereich abstützenden Karosseriesäulen (9) anschließt, mit seinen Seitenschenkeln (17a) in geschlossener Stellung parallel zu diesen liegt und zur Öffnung des hinteren Dachabschnitts (11) an karosseriefesten Schwenkgelenken (19) gehalten ist.

9. Kraftfahrzeug (1) nach,einem der Ansprüche 7 oder 8,
**dadurch gekennzeichnet,**
**daß** der Spriegel (17) in Offenstellung des hinteren Dachabschnitts (11) eingeknickt ist und mit dem oberen Teil seines Mittelschenkels (17c) in Fahrtrichtung (F) weist.

10. Kraftfahrzeug (1) nach einem der Ansprüche 1 bis 9,
**dadurch gekennzeichnet,**
**daß** ein die Heckscheibe (12) umfassender Teil des hinteren Dachabschnitts (11) über ein mehrere Baugruppen unterschiedlich bewegendes Getriebe (21) steuerbar ist, das zumindest während eines Teils einer Bewegung von mit dieser verbundenen Teilen (13;17;31) einen Stillstand der Heckscheibe (12) ermöglicht.

11. Kraftfahrzeug (1) nach Anspruch 10,
**dadurch gekennzeichnet,**
**daß** das Getriebe (21) ein Kurvengetriebe ist und zwei Kulissen (22;23) umfaßt, wobei ein Hebel (24) in einer Kulisse (22) eine Hin- und Rückbewegung ausführen kann, während er sich in der anderen Kulisse (23) in einer zwangsweise unbewegten Stellung befindet.

## Claims

1. A motor vehicle (1) with a vehicle body (6) comprising lateral roof frame parts (3), which are mounted to the vehicle body and extend at least partially above side windows (2), and between said roof frame parts (3) at least substantially plate-shaped roof parts (14; 15) can be held which are movable into a lowered opening position, the region with the vehicle body-mounted roof frame parts (3) being adjoined at the rear by a full-fledged convertible region (10) which comprises a rear roof portion (11), said rear roof portion (11), in its open position, fully exposing the space above a window-sill line (16),
**characterised in that**
the rear roof portion (11) comprises a rear window (12), which is surrounded at least laterally by flexible cover areas (13) and which, in the open position of the roof portion (11), is held in the manner of a lid at least approximately horizontally above the roof parts (14; 15) when they are in their open position.

2. The motor vehicle (1) according to claim 1, **characterised in that** it comprises four lateral doors (7; 8) and the roof frame parts (3) extend up to upwardly extending vehicle body pillars (9) immediately following the rear doors (8), and the full-fledged convertible region (10) begins immediately to the rear of said pillars (9).

3. The motor vehicle (1) according to any one of claims 1 or 2, **characterised in that** at least two substantially plate-shaped roof parts (14; 15) are provided, which are arranged behind each other in the closed position, the front roof part (14) being displaceable over or under the rear roof part (15) in the manner of a sunroof.

4. The motor vehicle (1) according to any one of claims 1 to 3, **characterised in that** the roof parts (14; 15) can be moved from their position located between the frame parts (3) into an opening position which is located at least partially below the extension (16) of the lower edge of the side windows (2).

5. The motor vehicle (1) according to any one of claims 3 or 4, **characterised in that** the rear roof portion (11) can be moved into its open or closed position when the roof parts (14; 15) are opened, when the front roof part (14) is opened in the manner of a sunroof, or when the roof parts (14; 15) are closed.

6. The motor vehicle (1) according to any one of claims 1 to 5, **characterised in that** the at least approximately plate-shaped roof parts (14; 15) can be displaced towards their open position in a partially opened position of the rear roof portion (11).

7. The motor vehicle (1) according to any one of claims 1 to 6, **characterised in that** the rear roof portion (11) comprises a substantially U-shaped bow (17) which comprises a centre leg, extending transversely with respect to the vehicle, and whose lateral legs (17a) can be folded.

8. The motor vehicle (1) according to claim 7, **characterised in that**, in the closed position, the bow (17) adjoins the vehicle body pillars (9) which rearwardly support the roof frames (3) mounted to the vehicle body, the lateral legs (17a) of the bow (17) being parallel to them in the closed position and the bow (17) being held by vehicle body-mounted pivot joints (19) for opening the rear roof portion (11).

9. The motor vehicle (1) according to any one of claims 7 or 8, **characterised in that** the bow (17) is folded in the open position of the rear roof portion (11) and the upper part of the centre leg (17c) of the bow (17) points in the direction of travel (F).

10. The motor vehicle (1) according to any one of claims 1 to 9, **characterised in that** a part of the rear roof portion (11) comprising the rear window (12) is controllable via a transmission (21) which moves several assemblies in different ways and enables a standstill of the rear window (12) during at least part of a movement of parts (13; 17; 31) connected with the rear window (12).

11. The motor vehicle (1) according to claim 10, **characterised in that** the transmission (21) is a cam mechanism and comprises two gates (22; 23), wherein a lever (24) can execute a reciprocating movement in a gate (22) while being forced into an immobile position in the other gate (23).

## Revendications

1. Véhicule automobile (1) avec une carrosserie (6) comprenant des éléments de cadre de toit latéraux (3), qui sont fixés à la carrosserie et s'étendent au moins partiellement au-dessus de fenêtres latérales (2) et entre lesquels peuvent être retenus des éléments de toit (14; 15), qui sont déplaçables vers une position d'ouverture abaissée et qui sont réalisés au moins partiellement sous forme de plaque, la région avec les éléments de cadre de toit (3) fixés à la carrosserie étant succédée à l'arrière par une région de cabriolet propre (10) qui comprend une partie de toit arrière (11) complètement libérant dans sa position ouverte l'espace au-dessus d'une ligne de parapet de fenêtre (16),
**caractérisé en ce que**
la partie de toit arrière (11) comprend une lunette arrière (12), qui est entourée au moins latéralement par des régions de capote flexibles (13) et qui, lorsque la partie de toit (11) se trouve en position ouverte, est retenue au moins presque horizontalement au-dessus des éléments de toit (14; 15), à la manière d'un couvercle, lorsque ces derniers se trouvent dans leur position ouverte.

2. Véhicule automobile (1) selon la revendication 1, **caractérisé en ce qu'**il comprend quatre portes latérales (7; 8) et les éléments de cadre de toit (3) s'étendent jusqu'à des montants de carrosserie (9) s'étendant vers le haut et succédant directement aux portes arrière (8), et la région de cabriolet propre (10) commence directement à l'arrière desdits montants (9).

3. Véhicule automobile (1) selon l'une quelconque des revendications 1 ou 2, **caractérisé en ce que** l'on prévoit au moins deux éléments de toit (14; 15) sensiblement sous forme de plaque, qui sont disposés l'un derrière l'autre en position fermée, l'élément de toit avant (14) étant déplaçable au-dessus ou au-dessous de l'élément de toit arrière (15) à la manière d'un toit ouvrant.

4. Véhicule automobile (1) selon l'une quelconque des revendications 1 à 3, **caractérisé en ce que** les éléments de toit (14; 15) sont déplaçables de leur position située entre les éléments de cadre (3) vers une position d'ouverture située au moins partiellement au-dessous de l'extension (16) du bord inférieur des fenêtres latérales (2).

5. Véhicule automobile (1) selon l'une quelconque des revendications 3 ou 4, **caractérisé en ce que** la partie de toit arrière (11) est déplaçable vers sa position ouverte ou fermée lorsque les éléments de toit (14; 15) sont ouverts, lorsque l'élément de toit avant (14) est ouvert à la manière d'un toit ouvrant, ou lorsque les éléments de toit (14; 15) sont fermés.

6. Véhicule automobile (1) selon l'une quelconque des revendications 1 à 5, **caractérisé en ce que** les éléments de toit (14; 15) au moins presque sous forme de plaque sont déplaçables vers leur position ouverte lorsque la partie de toit arrière (11) se trouve dans une position partiellement ouverte.

7. Véhicule automobile (1) selon l'une quelconque des revendications 1 à 6, **caractérisé en ce que** la partie de toit arrière (11) comprend un arceau (17) sensiblement sous forme de U qui comprend un bras central, s'étendant en direction transversale par rapport au véhicule, et dont les bras latéraux (17a) sont pliables.

8. Véhicule automobile (1) selon la revendication 7, **caractérisé en ce que** l'arceau (17), en position fermée, succède aux montants de carrosserie (9) qui supportent les cadres de toit (3) fixés à la carrosserie dans la région arrière, les bras latéraux (17a) de l'arceau (17) étant parallèles à ceux-ci en position fermée et l'arceau (17) étant retenu par des articulations (19) fixées à la carrosserie pour l'ouverture la partie de toit arrière (11).

9. Véhicule automobile (1) selon l'une quelconque des revendications 7 ou 8, **caractérisé en ce que** l'arceau (17) est plié dans la position ouverte de la partie de toit arrière (11) et la partie supérieure du bras central (17c) de l'arceau (17) est orienté dans la direction de marche (F).

10. Véhicule automobile (1) selon l'une quelconque des revendications 1 à 9, **caractérisé en ce qu'**une portion de la partie de toit arrière (11) comprenant la lunette arrière (12) peut être commandée par une transmission (21) qui déplace plusieurs composants de manières différentes et permet d'arrêter complètement la lunette arrière (12) pendant au moins une partie du mouvement des éléments (13; 17; 31) reliés à la lunette arrière (12).

11. Véhicule automobile (1) selon la revendication 10, **caractérisé en ce que** la transmission (21) est une commande à cames et comprend deux coulisses (22; 23), et un levier (24) peut exécuter un mouvement de va-et-vient dans une coulisse (22) tout en étant urgé dans une position immobile dans l'autre coulisse (23).
